(19) Europäisches Patentamt
European Patent Office
Office européen des brevets

(11) EP 3 910 713 A1

(12) EUROPEAN PATENT APPLICATION
published in accordance with Art. 153(4) EPC

(43) Date of publication:
**17.11.2021 Bulletin 2021/46**

(21) Application number: **20748356.1**

(22) Date of filing: **27.01.2020**

(51) Int Cl.:
***H01M 10/052*** *(2010.01)* ***H01M 10/054*** *(2010.01)*
***H01M 10/0562*** *(2010.01)* ***H01M 10/0565*** *(2010.01)*
***H01M 10/0585*** *(2010.01)*

(86) International application number:
**PCT/JP2020/002647**

(87) International publication number:
**WO 2020/158633 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019 JP 2019016089**

(71) Applicant: **DAIKIN INDUSTRIES, LTD.**
**Osaka-shi, Osaka 530-8323 (JP)**

(72) Inventors:
- **HAYASHI, Kotaro**
**Osaka-Shi, Osaka 530-8323 (JP)**
- **YAMAUCHI, Akiyoshi**
**Osaka-Shi, Osaka 530-8323 (JP)**
- **KISHIKAWA, Yosuke**
**Osaka-Shi, Osaka 530-8323 (JP)**

(74) Representative: **Hoffmann Eitle**
**Patent- und Rechtsanwälte PartmbB**
**Arabellastraße 30**
**81925 München (DE)**

# (54) STRUCTURE, COMPOSITE BODY, BATTERY AND METHOD FOR PRODUCING COMPOSITE BODY

(57) Provided are a novel structure and composite suitable for a battery, and a battery containing the structure or composite. The structure includes: an electrode layer; an inorganic solid electrolyte layer; and a fluorine-containing polymer layer between the electrode layer and the inorganic solid electrolyte layer, the fluorine-containing polymer layer containing a composite that contains a fluorine-containing polymer and an alkali metal salt.

EP 3 910 713 A1

Printed by Jouve, 75001 PARIS (FR)

## Description

TECHNICAL FIELD

The disclosure relates to structures, composites, batteries, and methods of producing a composite.

BACKGROUND ART

Along with the development of solid electrolytes having high ionic conductivity comparable to that of nonaqueous electrolytes, development for practical use of all-solid-state batteries has been accelerated recently.

Patent Literature 1 discloses an electrolyte membrane formed by casting on a glass plate a mixture of nitrile succinate, polyethylene oxide, polyethylene glycol dimethacrylate, lithium bis-trifluoromethanesulfonylimide, and an ultraviolet (UV) initiator and polymerizing the mixture by ultraviolet light irradiation.

Patent Literature 2 discloses a polymer electrolyte containing a segment such as perfluoropolyether (PFPE), a segment such as poly(ethylene oxide) (PEO), and a lithium salt.

CITATION LIST

- Patent Literature

Patent Literature 1: JP 2013-532360 T
Patent Literature 2: JP 2018-522085 T

SUMMARY OF INVENTION

- Technical Problem

The disclosure aims to provide a novel structure and composite suitable for a battery, and a battery containing the structure or composite.

- Solution to Problem

The disclosure relates to a structure including:

an electrode layer;
an inorganic solid electrolyte layer; and
a fluorine-containing polymer layer between the electrode layer and the inorganic solid electrolyte layer,
the fluorine-containing polymer layer containing a composite that contains a fluorine-containing polymer and an alkali metal salt.

The fluorine-containing polymer preferably contains a heteroatom other than a fluorine atom and contains a fluorine atom in a backbone.

Preferably, the composite further contains an organic hetero-crystal.

The disclosure relates to a composite including:

a fluorine-containing polymer; and
an alkali metal salt,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$$-[CR^5R^6-CR^7R^8]-$$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more.

Preferably, the functional group containing a heteroatom other than a fluorine atom is at least one selected from the group consisting of a hydroxy group, an amide group, a carbonate group, and an ester group.
Preferably, the structural unit (1) is based on at least one selected from the group consisting of tetrafluoroethylene, hexafluoropropylene, chlorotrifluoroethylene, vinylidene fluoride, perfluoro(methyl vinyl ether), and perfluoro(propyl vinyl ether).
Preferably, the structural unit (1) is based on at least one selected from the group consisting of tetrafluoroethylene and hexafluoropropylene, and
the structural unit (2) is based on a compound represented by the formula (i):

[Chem. 1]

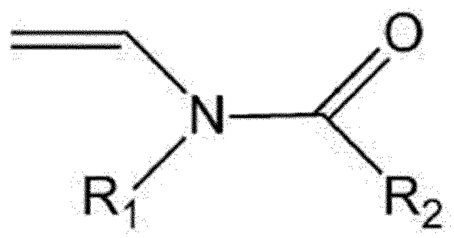

wherein $R_1$ and $R_2$ are each independently H or a C1-C10 alkyl group.
Preferably, the composite of the disclosure further contains an organic hetero-crystal.
Preferably, the organic hetero-crystal is a plastic crystal or molecular crystal containing a heteroatom and a carbon atom.
Preferably, the composite of the disclosure is intended for use for an electrolyte.
The disclosure also relates to a battery including the structure of the disclosure or the composite of the disclosure.
Preferably, the battery is an all-solid-state battery.
The disclosure also relates to a method of producing a composite, including:

step (1) of mixing a fluorine-containing polymer, an alkali metal salt, and a solvent to provide a mixture,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$$-[CR^5R^6-CR^7R^8]-$$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more; and
step (2) of removing the solvent from the mixture to provide a composite containing the fluorine-containing polymer and the alkali metal salt.

Preferably, the production method further includes step (3) of applying the mixture obtained in step (1) to an object.

- Advantageous Effects of Invention

The disclosure can provide a novel structure and composite suitable for a battery, and a battery containing the structure or composite.

BRIEF DESCRIPTION OF DRAWINGS

Fig. 1 includes graphs showing the results of linear sweep voltammetry (LSV) measurement in Example 5 and Comparative Example 3.

DESCRIPTION OF EMBODIMENTS

The disclosure will be specifically described below.

The disclosure relates to a structure containing an electrode layer, an inorganic solid electrolyte layer, and a fluorine-containing polymer layer between the electrode layer and the inorganic solid electrolyte layer, the fluorine-containing polymer layer containing a composite that contains a fluorine-containing polymer and an alkali metal salt.

The structure of the disclosure can exhibit excellent ionic conductivity and voltage resistance.

In an electrochemical device such as an all-solid-state battery, when an inorganic solid electrolyte is used as a material constituting an electrode layer or an electrolyte layer, voids tend to be generated between particles and thus the ionic conductivity tends to be reduced.

The structure of the disclosure including a specific fluorine-containing polymer layer between the electrode layer and the inorganic solid electrolyte layer is less likely to have voids between the electrode layer (containing particles of an electrode active material and of an inorganic solid electrolyte, for example) and the inorganic solid electrolyte layer and thus can exhibit excellent ionic conductivity such as excellent alkali metal ion conductivity.

Furthermore, use of the fluorine-containing polymer can provide excellent voltage resistance.

The structure of the disclosure can be suitably used as a material constituting a battery as described later.

The fluorine-containing polymer layer contains a composite that contains a fluorine-containing polymer and an alkali metal salt (hereinafter, also referred to as a composite (1)).

The fluorine-containing polymer may be any of various polymers containing a fluorine atom. Examples thereof include a fluorine-containing polymer containing a heteroatom other than a fluorine atom and containing a fluorine atom in the backbone (hereinafter, also referred to as a fluorine-containing polymer (1)); fluororesins other than the fluorine-containing polymer (1), such as a tetrafluoroethylene [TFE]/perfluoro(alkyl vinyl ether) [PAVE] copolymer [PFA], a TFE/hexafluoropropylene [HFP] copolymer [FEP], an ethylene [Et]/TFE copolymer [ETFE], an Et/TFE/HFP copolymer [EFEP], polychlorotrifluoroethylene [PCTFE], a chlorotrifluoroethylene [CTFE]/TFE copolymer, an Et/CTFE copolymer, polyvinyl fluoride [PVF], polyvinylidene fluoride [PVdF], a vinylidene fluoride [VdF]/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, and a VdF/PAVE/TFE copolymer; fluororubbers other than the fluorine-containing polymer (1), such as vinylidene fluoride [VdF]-based fluororubber, tetrafluoroethylene [TFE]/propylene [Pr]-based fluororubber, TFE/Pr/VdF-based fluororubber, ethylene [Et]/hexafluoropropylene [HFP]-based fluororubber, Et/HFP/VdF-based fluororubber, Et/HFP/TFE-based fluororubber, perfluororubber, fluorosilicone-based fluororubber, and fluorophosphazene-based fluororubber. Any one or two or more of these may be used.

The fluorine-containing polymer (1) contains a fluorine atom in the backbone. The fluorine-containing polymer (1) may also contain a fluorine atom at a position other than the backbone as long as it contains a fluorine atom in the backbone.

The fluorine-containing polymer (1) contains a heteroatom other than a fluorine atom. The fluorine-containing polymer (1) may contain the heteroatom in the backbone or in a side chain, preferably in a side chain.

The heteroatom may be any heteroatom other than a fluorine atom, preferably a heteroatom other than halogen atoms, more preferably at most two atoms selected from the group consisting of oxygen, nitrogen, sulfur, silicon, boron, and phosphorus atoms, still more preferably at most two atoms selected from the group consisting of oxygen, nitrogen, sulfur, and silicon atoms, particularly preferably at most two atoms selected from the group consisting of oxygen and nitrogen atoms. The phrase "at most two atoms" means one atom or two atoms.

The fluorine-containing polymer (1) preferably has a functional group containing a heteroatom other than a fluorine atom. Examples of the heteroatom contained in the functional group include those described in the above.

Examples of the functional group include a hydroxy group (excluding a hydroxy group in a carboxyl group, the same shall apply in the following), a carboxyl group, a urethane group, an amide group, a carbonyl group, a carbonate group, an ester group, an ether group, an amino group, an isocyanate group, a group represented by -COOCO-, a mercapto group, a silyl group, a silanate group, an epoxy group, and a cyano group.

The functional group is preferably at least one selected from the group consisting of a hydroxy group, an amide

group, a carbonate group, an ether group, and an ester group, more preferably at least one selected from the group consisting of a hydroxy group, an amide group, a carbonate group, and an ester group, still more preferably at least one selected from the group consisting of a hydroxy group, an amide group, and an ester group.

The fluorine-containing polymer (1) preferably does not contain a structure represented by the formula: $-(R^aO)_m-$ (wherein $R^a$ is a perfluoroalkylene group, and m is an integer of 2 or more).

Also, the fluorine-containing polymer (1) preferably does not contain a structure represented by the formula: $-(R^bO)_n-$ (wherein $R^b$ is a non-fluorinated alkylene group, and n is an integer of 1 or more) in the backbone.

The fluorine-containing polymer (1) preferably contains a structural unit based on a fluoromonomer and a structural unit based on a monomer having a functional group containing a heteroatom other than a fluorine atom (hereinafter, also referred to as a hetero group-containing monomer).

Examples of the fluoromonomer and the hetero group-containing monomer include the fluoromonomers and hetero group-containing monomers usable for the later-described fluorine-containing polymer (2).

The fluorine-containing polymer (1) is preferably the later-described fluorine-containing polymer (2).

The PVdF may be a homopolymer of VdF or a copolymer of VdF and a small amount of a comonomer. Examples of the comonomer include vinyl fluoride, a fluoroalkyl vinyl ether, a (perfluoroalkyl)ethylene, hexafluoropropylene, 2,3,3,3-tetrafluoropropene, trans-1,3,3,3-tetrafluoropropene, ethylene, and propylene.

When the PVdF is a copolymer of VdF and the comonomer, the amount of the polymerized unit based on the comonomer is preferably 5 mol% or less, more preferably 3 mol% or less, still more preferably 2 mol% or less, and particularly preferably 1 mol% or less, relative to the total polymerized units. The lower limit of the amount of the polymerized unit based on the comonomer may be 0.01 mol%.

The fluororesin other than the fluorine-containing polymer (1) preferably has a melting point of 100°C to 360°C, more preferably 140°C to 350°C, and still more preferably 160°C to 320°C.

The melting point is a temperature corresponding to the maximum value on a heat-of-fusion curve drawn using a differential scanning calorimeter (DSC) at a temperature-increasing rate of 10°C/min.

The fluororubber preferably has a Mooney viscosity at 100°C of 2 to 200, more preferably 10 to 150, still more preferably 30 to 80 or less.

The Mooney viscosity is measured in accordance with ASTM D 1646 and JIS K 6300.

The fluorine-containing polymer is preferably one that can dissolve the alkali metal salt.

The fluorine-containing polymer is preferably at least one selected from the group consisting of the fluorine-containing polymer (1) and a fluororesin other than the fluorine-containing polymer (1), more preferably the fluorine-containing polymer (1).

Examples of the alkali metal salt include, but not limited to, fluorides, chlorides, bromides, sulfates, nitrates, sulfides, hydrides, nitrides, phosphides, sulfonimide salts, triflates, thiocyanates, perchlorates, borates, selenides, fluorophosphates, fluorosulfonate, and sulfamates of alkali metals such as lithium, sodium, and potassium.

Specific examples of the alkali metal salt include lithium salts such as LiSCN, $LiN(CN)_2$, $LiClO_4$, $LiBF_4$, $LiAsF_6$, $LiPF_6$, $LiCF_3SO_3$, $Li(CF_3SO_2)_2N$, $Li(CF_3SO_2)_3C$, $LiN(SO_2C_2F_5)_2$, lithium alkyl fluorophosphates, lithium oxalato borates, other lithium bis(chelate) borates having a 5- to 7-membered ring, lithium bis(trifluoromethanesulfonimide) (LiTFSI), lithium bis(monofluorosulfonimide) (LiFSI), LiCl, LiF, LiBr, LiI, $LiPF_3(C_2F_5)_3$, $LiPF_3(CF_3)_3$, $LiB(C_2O_4)_2$, lithium difluorooxalatoborate (LiDFOB), $LiPO_2F_2$, $LiSO_3F$, $(CH_3CH_2)_2NSO_3Li$, $(CH_2{=}CHCH_2)_2NSO_3Li$, $(CF_3CH_2)_2NSO_3Li$, $(CF_3CH_2)N(CH_3)SO_3Li$, $(N{\equiv}CCH_2)_2NSO_3Li$, lithium pyrrolidine-1-sulfonate, lithium piperidine-1-sulfonate, and lithium morpholine-4-sulfonate; sodium salts such as NaSCN, $NaSO_3CF_3$, NaCl, NaF, NaBr, NaI, NaFSI, and NaTFSI; potassium salts such as KCl, KF, KBr, KI, KFSI, and KTFSI; and mixtures of these.

Preferred among these alkali metal salts are LiSCN, $LiN(CN)_2$, $LiClO_4$, $LiBF_4$, $LiAsF_6$, $LiPF_6$, $LiCF_3SO_3$, $Li(CF_3SO_2)_2N$, $Li(CF_3SO_2)_3C$, $LiN(SO_2C_2F_5)_2$, LiTFSI, LiFSI, LiCl, LiF, LiBr, LiI, $LiPO_2F_2$, $LiSO_3F$, $(CH_3CH_2)_2NSO_3Li$, $(CH_2{=}CHCH_2)_2NSO_3Li$, $(CF_3CH_2)_2NSO_3Li$, $(CF_3CH_2)N(CH_3)SO_3Li$, $(N{\equiv}CCH_2)_2NSO_3Li$, lithium pyrrolidine-1-sulfonate, lithium piperidine-1-sulfonate, and lithium morpholine-4-sulfonate, more preferred are LiTFSI, LiFSI, LiCl, LiF, LiBr, LiI, $LiPO_2F_2$, $LiSO_3F$, $(CH_3CH_2)_2NSO_3Li$, and $(CH_2{=}CHCH_2)_2NSO_3Li$, and particularly preferred are LiTFSI, LiFSI, LiI, $LiPO_2F_2$, $LiSO_3F$, $(CH_3CH_2)_2NSO_3Li$, and $(CH_2{=}CHCH_2)_2NSO_3Li$.

The alkali metal salt is preferably dissolved in the fluorine-containing polymer (1). Thereby, the ionic conductivity is further improved.

The amount of the alkali metal salt is preferably 0.1 to 500 parts by mass, more preferably 1 to 100 parts by mass, still more preferably 10 to 50 parts by mass based on 100 parts by mass of the fluorine-containing polymer (1).

The composite (1) preferably further contains an organic hetero-crystal. Thereby, the ionic conductivity is further improved. Examples of the organic hetero-crystal include the later-described organic hetero-crystals usable for the composite of the disclosure.

The amount of the organic hetero-crystal is preferably 0.1 to 100 parts by mass, more preferably 0.5 to 50 parts by mass based on 100 parts by mass of the fluorine-containing polymer (1).

The composite (1) can be produced according to the later-described production method of the disclosure.

The electrode layer preferably contains an electrode active material and an inorganic solid electrolyte.

The electrode active material may be a positive electrode active material or a negative electrode active material according to the polarity of the electrode.

The positive electrode active material may be any material used as a positive electrode active material in an all-solid-state battery.

Examples thereof include lithium-containing compounds such as lithium cobaltate ($LiCoO_2$), lithium nickelate ($LiNiO_2$), lithium manganate ($LiMn_2O_4$), $LiNiCoO_2$, lithium nickel cobalt manganates (such as $LiCO_{1/3}Ni_{1/3}Mn_{1/3}O_2$), aluminum-containing lithium nickel cobaltates (such as $LiNi_{0.8}Co_{0.15}Al_{0.05}O_2$), a Li-Mn spinel substituted with a heterogeneous element, having a composition represented by $Li_{1+x}Mn_{2-x-y}M_yO_4$ (wherein M is one or more metal elements selected from the group consisting of Al, Mg, Co, Fe, Ni, and Zn), lithium titanates ($Li_xTiO_y$), lithium metal phosphates ($LiMPO_4$, wherein M is Fe, Mn, Co, or Ni), transition metal oxides (such as $V_2O_5$ and $MoO_3$), sulfur-containing compounds (such as $Li_2S$ and $TiS_2$), lithium silicon oxides ($Li_xSi_yO_z$), lithium metal (Li), lithium alloys (LiM, wherein M is Sn, Si, Al, Ge, Sb, or P), lithium storage intermetallic compounds ($Mg_xM$ and $L_ySb$, wherein M is Sn, Ge, or Sb, and L is In, Cu, or Mn), Li-rich complex oxides ($Li_2MnO_3$-$LiMO_2$), $Li_2PtO_3$, $LiNiVO_4$, $LiCoVO_4$, $LiCrMnO_4$, and $LiFe (SO_4)_3$; and sodium-containing compounds such as $Na_4M_3(PO_4)_2P_2O_7$ (wherein M is Ni, Co, or Mn); and derivatives of these.

The positive electrode active material may have any particle size, and preferably has an average particle size of 3 to 20 $\mu$m.

The negative electrode active material may be any material used as a negative electrode active material in an all-solid-state battery.

Examples thereof include a carbonaceous material allowing inserting and desorbing of an alkali metal ion, a single substance or alloy of a metal or metalloid allowing inserting and desorbing of an alkali metal ion, and a compound. Examples of the carbonaceous material include graphite (such as natural graphite and artificial graphite), hard carbon, and amorphous carbon. Examples of a single substance or alloy of a metal or metalloid include lithium metal and an alloy thereof; powder of a metal such as Sn, Si, Al, Sb, Zn, or Bi; powder of a metal alloy such as $Sn_5Cu_6$, $Sn_2Co$, $Sn_2Fe$, Ti-Sn, or Ti-Si; and amorphous alloys and plated alloys. Examples of the compound include an oxide, a sulfide, a nitride, a hydride, and a silicide (such as lithium silicide). Examples of the oxide include titanium oxide, lithium titanium oxide (such as $Li_{4/3}Ti_{5/3}O$) and silicon oxide. An example of the nitride is lithium cobalt nitride (LiCoN). Any of negative electrode active materials may be used alone or in combination of two or more thereof. For example, a silicon oxide and a carbonaceous material may be used in combination.

The negative electrode active material may have any particle size, and preferably has an average particle size of 3 to 80 $\mu$m.

The inorganic solid electrolyte may be an inorganic solid electrolyte similar to the later-described inorganic solid electrolyte usable for the inorganic solid electrolyte layer.

The electrode layer may further contain a binder and a conductive aid.

Examples of the binder include the composite (1), polysiloxane, a polyalkylene glycol, polytetrafluoroethylene (PTFE), polyvinylidene fluoride (PVDF), polyvinyl fluoride, hydrogenated butylene rubber, polysulfide rubber, styrene-butadiene rubber (SBR), styrene-butadiene rubber/carboxymethyl cellulose (SBR/CMC), polyethylene oxide (PEO), branched PEO, polyphenylene oxide (PPO), a PEO-PPO copolymer, a branched PEO-PPO copolymer, and an alkylborane-containing polyether.

Any conventional material may be used for the conductive aid. For example, graphite or carbon black may be used.

The electrode layer may further contain an electrode current collector. Any electrode current collector used as an electrode current collector of an all-solid-state battery may be used. The electrode current collector may be in the form of foil, a plate, a net, an aggregate of powder, a film of a material of an electrode current collector, or the like. Examples of the foil include electrolytic foil and etched foil.

Examples of the material of the electrode current collector include aluminum, magnesium, stainless steel, titanium, iron, cobalt, zinc, tin, copper, nickel, germanium, indium, an alloy of any of these, and carbon.

The electrode layer may have a thickness of 50 to 500 $\mu$m, for example.

The electrode layer can be produced, for example, by mixing the inorganic solid electrolyte, the electrode active material, and if necessary, other components with a solvent, applying the resulting solution mixture to a substrate (e.g., the electrode current collector), and drying the solution mixture. The method may further include pressing according to need.

In addition to the above method, the production may be performed by blasting, aerosol deposition, cold spraying, sputtering, vapor phase growth, pressure pressing, thermal spraying, or the like.

The solvent for producing the electrode layer is preferably an organic solvent. Examples of the organic solvent include hydrocarbon organic solvents such as hexane, heptane, toluene, xylene, and decalin. The organic solvent is preferably used after reducing the water content by dehydration.

Examples of the inorganic solid electrolyte constituting the inorganic solid electrolyte layer include a sulfide-based solid electrolyte and an oxide-based solid electrolyte.

The sulfide-based solid electrolyte may be any sulfide-based solid electrolyte containing a sulfur component and may be formed from a material usable as a sulfide-based solid electrolyte of an all-solid-state battery.

Examples of the sulfide-based solid electrolyte include lithium ion conductors such as $Li_2S-SiS_2$, $Li_2S-P_2S_5$, $Li_2S-GeS_2$, $Li_2S-B_2S_3$, $Li_2S-Ga_2S_3$, $Li_2S-Al_2S_3$, $Li_2S-GeS_2-P_2S_5$, $Li_2S-Al_2S_3-P_2S_5$, $Li_2S-P_2S_3$, $Li_2S-P_2S_3-P_2S_5$, $LiX^0-Li_2S-P_2S_5$, $LiX^0-Li_2S-SiS_2$, $LiX^0-Li_2S-B_2S_3$, $Li_3PO_4-Li_2S-Si_2S$, $Li_3PO_4-Li_2S-SiS_2$, $LiPO_4-Li_2S-SiS$, $LiX^0-Li_2S-P_2O_5$, and $LiX^0-Li_3PO_4-P_2S_5$ (wherein $X^0$ is I, Br, or Cl) .

The sulfide-based solid electrolyte may be crystalline, amorphous, or a glass ceramic.

The oxide-based solid electrolyte may be formed from a material usable as an oxide-based solid electrolyte of an all-solid-state battery.

Examples of the oxide-based solid electrolyte include LiPON, $Li_3PO_4$, $Li_2SiO_2$, $Li_2SiO_4$, $Li_{0.5}La_{0.5}TiO_3$, $Li_{1.3}Al_{0.3}Ti_{0.7}(PO_4)_3$, $La_{0.51}Li_{0.34}TiO_{0.74}$, and $Li_{1.5}Al_{0.5}Ge_{1.5}(PO_4)_3$.

The oxide-based solid electrolyte may be crystalline, amorphous, or a glass ceramic.

The inorganic solid electrolyte layer may further contain a binder. Examples of the binder include the above-mentioned composite (1), polysiloxane, a polyalkylene glycol, polyethylene, polypropylene, polytetrafluoroethylene (PTFE), polyvinylidene fluoride (PVDF), a tetrafluoroethylene-hexafluoroethylene copolymer, a tetrafluoroethylene-hexafluoropropylene copolymer (FEP), a tetrafluoroethylene-perfluoroalkyl vinyl ether copolymer (PFA), a vinylidene fluoride-hexafluoropropylene copolymer, a vinylidene fluoride-chlorotrifluoroethylene copolymer, an ethylene-tetrafluoroethylene copolymer (ETFE), polychlorotrifluoroethylene (PCTFE), a vinylidene fluoride-pentafluoropropylene copolymer, a propylene-tetrafluoroethylene copolymer, an ethylene-chlorotrifluoroethylene copolymer (ECTFE), a vinylidene fluoride-hexafluoropropylene-tetrafluoroethylene copolymer, a vinylidene fluoride-perfluoromethylvinylether-tetrafluoroethylene copolymer, an ethylene-(meth)acrylic acid copolymer and those crosslinked with ions ($Na^+$), and an ethylene-methyl (meth)acrylate copolymer and those crosslinked with ions ($Na^+$).

The inorganic solid electrolyte layer can be produced, for example, by mixing the inorganic solid electrolyte and, if necessary, other components with a solvent, applying the resulting solution mixture to a substrate, and drying the solution mixture. The method may further include pressing according to need.

In addition to the above method, the production may be performed by blasting, aerosol deposition, cold spraying, sputtering, vapor phase growth, pressure pressing, thermal spraying, or the like.

The solvent for producing the inorganic solid electrolyte layer is preferably an organic solvent. Examples of the organic solvent include heptane, toluene, hexane, tetrahydrofuran (THF), methyl isobutyl ketone (MIBK), N-methylpyrrolidone, acetonitrile, dimethoxy ethane, and dimethyl carbonate. The organic solvent is preferably used after reducing the water content by dehydration.

In the structure of the disclosure, at least part of the composite (1) constituting the fluorine-containing polymer layer preferably fills the voids (e.g., voids between particles of the inorganic solid electrolyte) in at least part of the inorganic solid electrolyte layer.

Also, at least part of the composite (1) preferably fills the voids (e.g., voids between particles of the electrode active material or of inorganic solid electrolyte) in at least part of the electrode layer.

The structure of the disclosure can be produced, for example, by sequentially stacking the electrode layer, the fluorine-containing polymer layer, and the inorganic solid electrolyte layer and pressing the stack if needed.

Alternatively, the structure may be produced by applying a raw material mixture of the fluorine-containing polymer layer (the composite (1)) to the electrode layer or the inorganic solid electrolyte layer, removing the solvent, stacking the inorganic solid electrolyte layer or the electrode layer on the formed fluorine-containing polymer layer, and pressing the stack if needed.

The structure of the disclosure can be used in the field requiring ionic conductivity and voltage resistance, and can be suitably used as a material constituting a battery, especially a secondary battery, for example. Especially, the structure can be suitably used as a material constituting an all-solid-state battery, especially a secondary all-solid-state battery.

The disclosure also relates to a composite (hereinafter, also referred to as a composite (2)) including:

a fluorine-containing polymer (hereinafter, also referred to as a fluorine-containing polymer (2)); and
an alkali metal salt,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$-[CR^5R^6-CR^7R^8]-$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more.

The composite (2) of the disclosure can exhibit excellent ionic conductivity and voltage resistance.

Since the fluorine-containing polymer (2) can excellently dissolve the alkali metal salt, the composite (2) can exhibit excellent ionic conductivity such as excellent alkali metal ion conductivity. Also, the composite (2) containing the fluorine-containing polymer (2) can exhibit excellent voltage resistance.

The composite (2) of the disclosure can be suitably used as a material constituting a battery as described later.

The fluorine-containing polymer (2) does not contain a structure represented by the formula: $-(R^aO)_m-$ (wherein $R^a$ is a perfluoroalkylene group, and m is an integer of 2 or more). In spite of the absence of this structure in the fluorine-containing polymer (2), the composite (2) can exert excellent ionic conductivity and voltage resistance.

The fluorine-containing polymer (2) preferably does not contain a structure represented by the formula: $-(R^bO)_n-$ (wherein $R^b$ is a non-fluorinated alkylene group, and n is an integer of 1 or more) in the backbone.

In the structural unit (1), $R^1$ to $R^4$ are each independently H, F, Cl, $CF_3$, or $OR^{11}$, wherein $R^{11}$ is a C1-C8 organic group, and at least one of $R^1$ to $R^4$ is F.

The carbon number of the organic group for $R^{11}$ is preferably 1 to 5, more preferably 1 to 3.

The organic group is preferably an optionally-fluorinated alkyl group, more preferably a fluoroalkyl group, still more preferably a perfluoroalkyl group.

Examples of the perfluoroalkyl group include a perfluoromethyl group, a perfluoroethyl group, a perfluoropropyl group, a perfluorobutyl group, a perfluoropentyl group, and a perfluorohexyl group, with a perfluoromethyl group and a perfluoropropyl group being particularly preferred.

The structural unit (1) is preferably based on a fluoromonomer (a) represented by the formula: $CR^1R^2=CR^3R^4$ (wherein $R^1$ to $R^4$ are the same as defined in the above).

Examples of the fluoromonomer (a) include monofluoroethylene, trifluoroethylene, vinylidene fluoride (VdF), tetrafluoroethylene (TFE), chlorotrifluoroethylene (CTFE), hexafluoropropylene (HFP), and perfluoro(alkyl vinyl ether) (PAVE) having a C1-C8 alkyl group. One or two or more of these may be used.

Examples of PAVE include perfluoro(methyl vinyl ether), perfluoro(ethyl vinyl ether), perfluoro(propyl vinyl ether), perfluoro(butyl vinyl ether), perfluoro(pentyl vinyl ether), and perfluoro(hexyl vinyl ether), with perfluoro(methyl vinyl ether) (PMVE) and perfluoro(propyl vinyl ether) (PPVE) being particularly preferred.

The fluoromonomer (a) is preferably at least one selected from the group consisting of TFE, HFP, CTFE, VdF, PMVE, and PPVE, more preferably at least one selected from the group consisting of TFE and HFP, still more preferably TFE.

Examples of the structural unit (1) include $-[CH_2-CHF]-$, $-[CH_2-CF_2]-$, $-[CF_2-CHF]-$, $-[CF_2-CF_2]-$, $-[CF_2-CFCl]-$,$-[CF_2-CFCF_3]-$, and $-[CF_2-CFORf^{11}]-$ (wherein $Rf^{11}$ is a C1-C8 perfluoroalkyl group). Any one or two or more of these may be used.

Preferred among these is at least one selected from the group consisting of $-[CF_2-CF_2]-$, $-[CF_2-CFCF_3]-$, $-[CF_2-CFCl]-$, $-[CH_2-CF_2]-$, $-[CF_2-CFOCF_3]-$, and $-[CF_2-CFOC_3F_7]-$, more preferred is at least one selected from the group consisting of $-[CF_2-CF_2]-$ and $-[CF_2-CFCF_3]-$, and still more preferred is $-[CF_2-CF_2]-$.

The number of repetitions of the structural unit (1) is preferably 10 to 1000, more preferably 100 to 500.

In the structural unit (2), $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group.

When two or more of $R^5$ to $R^8$ are the functional groups or groups containing the functional group, they may be bonded to each other.

The carbon number of the alkyl group for $R^5$ to $R^8$ is 1 to 3, preferably 1 or 2, more preferably 1.

In the functional group or the group containing the functional group for $R^5$ to $R^8$, the heteroatom may be any heteroatom other than a fluorine atom, preferably a heteroatom other than halogen atoms, more preferably at most two atoms selected from the group consisting of oxygen, nitrogen, sulfur, silicon, boron, and phosphorus atoms, still more preferably at most two atoms selected from the group consisting of oxygen, nitrogen, sulfur, and silicon atoms, particularly preferably at most two atoms selected from the group consisting of oxygen and nitrogen atoms.

Examples of the functional group include a hydroxy group (excluding a hydroxy group in a carboxyl group, the same shall apply in the following), a carboxyl group, a urethane group, an amide group, a carbonyl group, a carbonate

group, an ester group, an ether group, an amino group, an isocyanate group, a group represented by -COOCO-, a mercapto group, a silyl group, a silanate group, an epoxy group, and a cyano group. Preferred among these is at least one selected from the group consisting of a hydroxy group, an amide group, a carbonate group, an ether group, and an ester group, more preferred is at least one selected from the group consisting of a hydroxy group, an amide group, a carbonate group, and an ester group, and still more preferred is at least one selected from the group consisting of a hydroxy group, an amide group, and an ester group.

The carbon number of the functional group or the group containing the functional group is preferably 0 to 20, more preferably 0 to 10.

The functional group or the group containing the functional group is preferably a hydroxy group, a group having a lactam structure, an ether group, an acyloxy group, or a group containing at least one of these, more preferably a hydroxy group, a group having a lactam structure having a 5- to 6-membered ring, an ether group, an acyloxy group, or a group containing at least one of these, still more preferably a hydroxy group, a pyrrolidone group, an ether group, an acetoxy group, or a group containing at least one of these, further more preferably a hydroxy group, a pyrrolidone group, an ether group, or an acetoxy group, still further more preferably a hydroxy group, a pyrrolidone group, or an acetoxy group, particularly preferably a hydroxy group or a pyrrolidone group, most preferably a pyrrolidone group.

In the structural unit (2), one or two of $R^5$ to $R^8$ are preferably a functional group containing a heteroatom other than a fluorine atom or a group containing the functional group.

In a preferred embodiment for the structural unit (2), $R^5$ and $R^6$ are each H, $R^7$ is H or a C1-C3 alkyl group, and $R^8$ is a functional group containing a heteroatom other than a fluorine atom or a group containing the functional group.

One or two or more structural units (2) may be used.

The structural unit (2) is preferably based on a monomer represented by formula: $CR^5R^6=CR^7R^8$ (wherein $R^5$ to $R^8$ are the same as defined in the above) (hereinafter, also referred to as a hetero group-containing monomer).

Examples of the hetero group-containing monomer include a hydroxy group-containing monomer, an amide group-containing monomer, an ester group-containing monomer, a carboxyl group-containing monomer, an amino group-containing monomer, a hydrolyzable silyl group-containing monomer, and an ether group-containing monomer, and one or two or more of these can be used.

The hydroxy group-containing monomer is preferably at least one selected from the group consisting of vinyl alcohol, a hydroxyalkyl vinyl ether, a hydroxyalkyl allyl ether, a hydroxycarboxylic acid vinyl ester, a hydroxycarboxylic acid allyl ester, and hydroxyalkyl (meth)acrylate, more preferably at least one selected from the group consisting of vinyl alcohol, a hydroxyalkyl vinyl ether, and a hydroxyalkyl allyl ether, still more preferably at least one selected from the group consisting of vinyl alcohol and a hydroxyalkyl vinyl ether, particularly preferably vinyl alcohol.

Examples of the hydroxyalkyl vinyl ether include 2-hydroxyethyl vinyl ether, 3-hydroxypropyl vinyl ether, 2-hydroxypropyl vinyl ether, 2-hydroxy-2 methylpropyl vinyl ether, 4-hydroxybutyl vinyl ether, 4-hydroxy-2 methylbutyl vinyl ether, 5-hydroxypentyl vinyl ether, 6-hydroxyhexyl vinyl ether, and 4-(hydroxymethyl) cyclohexylmethyl vinyl ether.

Examples of the hydroxyalkyl allyl ether include 2-hydroxyethyl allyl ether, 4-hydroxybutyl allyl ether, and glycerol monoallyl ether.

Examples of the hydroxycarboxylic acid vinyl ester include vinyl hydroxyacetate, vinyl hydroxypropanoate, vinyl hydroxybutanoate, vinyl hydroxyhexanoate, and vinyl 4-hydroxycyclohexylacetate.

Examples of the hydroxy carboxylic acid allyl ester include allyl hydroxyacetate, allyl hydroxypropanoate, allyl hydroxybutanoate, allyl hydroxyhexanoate, and allyl 4-hydroxycyclohexylacetate.

Examples of the hydroxyalkyl (meth)acrylate include 2-hydroxyethyl acrylate and 2-hydroxyethyl methacrylate.

The hydroxy group-containing monomer is preferably at least one selected from the group consisting of vinyl alcohol and a monomer represented by the formula (A): $CH_2=CH-(CH_2)_l-O-(CH_2)_m-OH$ (wherein 1 is 0 or 1, and m is an integer of 2 to 20), more preferably at least one selected from the group consisting of vinyl alcohol, 4-hydroxybutyl vinyl ether, 2-hydroxyethyl vinyl ether, 2-hydroxyethyl allyl ether, and 4-hydroxybutyl allyl ether, particularly preferably vinyl alcohol.

Examples of the amide group-containing monomer include N-vinyl lactam compounds such as N-vinyl-β-propiolactam, N-vinyl-2-pyrrolidone, N-vinyl-γ-valerolactam, N-vinyl-2-piperidone, and N-vinyl-heptolactam; acyclic N-vinyl amide compounds such as N-vinyl formamide and N-methyl-N-vinyl acetamide; acyclic N-allyl amide compounds such as N-allyl-N-methyl formamide and allylurea; N-allyllactam compounds such as 1-(2-propenyl)-2-pyrrolidone; and acrylamide compounds such as (meth)acrylamide, N,N-dimethylacrylamide, and N-isopropylacrylamide.

Examples of the amide group-containing monomer include a compound represented by the formula (i):

[Chem. 2]

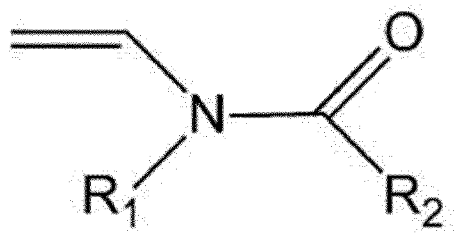

(wherein $R_1$ and $R_2$ are each independently H or a C1-C10 alkyl group) and a compound represented by the formula (ii) :

[Chem. 3]

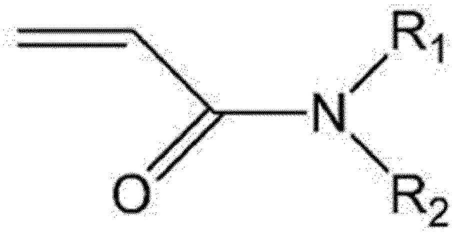

(wherein $R_1$ and $R_2$ are each independently H or a C1-C10 alkyl group).

In the above formulas, $R_1$ and $R_2$ may be bonded to each other to form a ring.

The amide group-containing monomer is preferably an N-vinyl lactam compound or an acyclic N-vinyl amide compound, more preferably at least one selected from the group consisting of N-vinyl-β-propiolactam, N-vinyl-2-pyrrolidone, N-vinyl-γ-valerolactam, N-vinyl-2-piperidone, and N-vinyl-heptolactam, still more preferably at least one selected from the group consisting of N-vinyl-2-pyrrolidone and N-vinyl-2-piperidone, particularly preferably N-vinyl-2-pyrrolidone.

The amide group-containing monomer is also preferably a compound represented by the formula (i).

Examples of the ester group-containing monomer include isopropenyl acetate, a vinyl ester containing neither a hydroxy group nor an aromatic ring, and a carboxylic acid vinyl ester containing an aromatic ring but not containing a hydroxy group.

The vinyl ester containing neither a hydroxy group nor an aromatic ring is preferably a carboxylic acid vinyl ester, more preferably at least one selected from the group consisting of vinyl acetate, vinyl propionate, vinyl butyrate, vinyl isobutyrate, vinyl pivalate, vinyl caproate, vinyl versatate, vinyl laurate, vinyl stearate, and vinyl cyclohexylcarboxylate, still more preferably at least one selected from the group consisting of vinyl acetate, vinyl versatate, vinyl laurate, vinyl stearate, and vinyl cyclohexylcarboxylate, particularly preferably at least one selected from the group consisting of vinyl acetate and vinyl versatate, most preferably vinyl acetate.

Examples of the carboxylic acid vinyl ester containing an aromatic ring but not containing a hydroxy group include vinyl benzoate and vinyl para-t-butyl benzoate.

Preferred among the ester group-containing monomers are a vinyl ester containing neither a hydroxy group nor an aromatic ring and isopropenyl acetate, and more preferred are vinyl acetate and isopropenyl acetate.

The carboxyl group-containing monomer is preferably one represented by the formula (B) : $CH_2=CR^{1a}-(CH_2)_n-COOH$ (wherein $R^{1a}$ is a hydrogen atom or a C1-C10 linear or branched alkyl group, and n is an integer not smaller than 0), and examples thereof include acrylic acid, methacrylic acid, vinyl acetic acid, pentenoic acid, hexenoic acid, heptenoic acid, octenoic acid, nonenoic acid, decenoic acid, undecylenic acid, dodecenoic acid, tridecenoic acid, tetradecenoic acid, pentadecenoic acid, hexadecenoic acid, heptadecenoic acid, octadecenoic acid, nonadecenoic acid, eicosenic acid, and 22-tricosenoic acid. Preferred among these is at least one selected from the group consisting of acrylic acid and undecylenic acid, and more preferred is acrylic acid.

Examples of the carboxyl group-containing monomer include 3-allyloxypropionic acid, vinyl phthalate, vinyl pyromellitate, crotonic acid, itaconic acid, itaconic acid monoester, maleic acid, maleic acid monoester, maleic anhydride, fumaric acid, fumaric acid monoester, citraconic acid, mesaconic acid, and aconitic acid.

Examples of the amino group-containing monomer include an amino vinyl ether represented by $CH_2=CH-O-(CH_2)_x-NH_2$ (wherein x = 0 to 10), amines represented by $CH_2=CH-O-CO(CH_2)_x-NH_2$ (wherein x = 1 to 10), aminomethyl styrene, and vinyl amine.

Examples of the hydrolyzable silyl group-containing monomer include (meth)acrylic acid esters such as

$CH_2=CHCO_2(CH_2)_3Si(OCH_3)_3$, $CH_2=CHCO_2(CH_2)_3Si(OC_2H_5)_3$, $CH_2=C(CH_3)CO_2(CH_2)_3Si(OCH_3)_3$, $CH_2=C(CH_3)CO_2(CH_2)_3Si(OC_2H_5)_3$, $CH_2=CHCO_2(CH_2)_3SiCH_3(OC_2H_5)_2$, $CH_2=C(CH_3)CO_2(CH_2)_3SiC_2H_5(OCH_3)_2$, $CH_2=C(CH_3)CO_2(CH_2)_3Si(CH_3)_2(OC_2H_5)$, $CH_2=C(CH_3)CO_2(CH_2)_3Si(CH_3)_2OH$, $CH_2=CH(CH_2)_3Si(OCOCH_3)_3$, $CH_2=C(CH_3)CO_2(CH_2)_3SiC_2H_5(OCOCH_3)_2$, $CH_2=C(CH_3)CO_2(CH_2)_3SiCH_3(N(CH_3)COCH_3)_2$, $CH_2=CHCO_2(CH_2)_3SiCH_3[ON(CH_3)C_2H_5]_2$, and $CH_2=C(CH_3)CO_2(CH_2)_3SiC_6H_5[ON(CH_3)C_2H_5]_2$; vinyl silanes such as $CH_2=CHSi[ON=C(CH_3)(C_2H_5)]_3$, $CH_2=CHSi(OCH_3)_3$, $CH_2=CHSi(OC_2H_5)_3$, $CH_2=CHSiCH_3(OCH_3)_2$, $CH_2=CHSi(OCOCH_3)_3$, $CH_2=CHSi(CH_3)_2(OC_2H_5)$, $CH_2=CHSi(CH_3)_2SiCH_3(OCH_3)_2$, $CH_2=CHSiC_2H_5(OCOCH_3)_2$, $CH_2=CHSiCH_3[ON(CH_3)C_2H_5]_2$, vinyl trichlorosilane, and partial hydrolysate of these; and vinyl ethers such as trimethoxysilylethyl vinyl ether, triethoxysilylethyl vinyl ether, trimethoxysilylbutyl vinyl ether, methyldimethoxysilylethyl vinyl ether, trimethoxysilylpropyl vinyl ether, and triethoxysilylpropyl vinyl ether.

An example of the ether group-containing monomer is an alkyl vinyl ether containing no hydroxy group. Examples of the alkyl vinyl ether containing no hydroxy group include methyl vinyl ether, ethyl vinyl ether, n-propyl vinyl ether, isopropyl vinyl ether, n-butyl vinyl ether, isobutyl vinyl ether, tert-butyl vinyl ether, 2-ethylhexyl vinyl ether, cyclohexyl vinyl ether, dodecyl vinyl ether, and octadecyl vinyl ether. Preferred among these is at least one selected from the group consisting of ethyl vinyl ether and cyclohexyl vinyl ether.

The hetero group-containing monomer is

preferably at least one selected from the group consisting of the hydroxy group-containing monomer, the amide group-containing monomer, and the ester group-containing monomer,
more preferably at least one selected from the group consisting of the hydroxy group-containing monomer and the amide group-containing monomer,
still more preferably the amide group-containing monomer,
particularly preferably a compound represented by the formula (i), and
most preferably N-vinyl-2-pyrrolidone.

The hetero group-containing monomer is

preferably at least one selected from the group consisting of vinyl alcohol, N-vinyl-2-pyrrolidone, vinyl acetate, and isopropenyl acetate,
more preferably at least one selected from the group consisting of vinyl alcohol and N-vinyl-2-pyrrolidone,
still more preferably N-vinyl-2-pyrrolidone.

The number of repetitions of the structural unit (2) is preferably 10 to 1000, more preferably 100 to 500.

Among these examples, the fluorine-containing polymer (2) is

preferably one containing a structural unit (1) based on at least one selected from the group consisting of TFE and HFP and a structural unit (2) based on at least one selected from the group consisting of the hydroxy group-containing monomer, the amide group-containing monomer, and the ester group-containing monomer,
more preferably one containing a structural unit (1) based on at least one selected from the group consisting of TFE and HFP and a structural unit (2) based on at least one selected from the group consisting of the hydroxy group-containing monomer and the amide group-containing monomer,
still more preferably one containing a structural unit (1) based on at least one selected from the group consisting of TFE and HFP and a structural unit (2) based on the amide group-containing monomer,
particularly preferably one containing a structural unit (1) based on at least one selected from the group consisting of TFE and HFP and a structural unit (2) based on a compound represented by the formula (i),
most preferably one containing a structural unit (1) based on at least one selected from the group consisting of TFE and HFP and a structural unit (2) based on N-vinyl-2-pyrrolidone.

Also, the fluorine-containing polymer (2) is preferably one containing a structural unit (1) based on at least one selected from the group consisting of TFE and HFP and a structural unit (2) based on at least one selected from the group consisting of vinyl alcohol, N-vinyl-2-pyrrolidone, vinyl acetate, and isopropenyl acetate,

more preferably one containing a structural unit (1) based on at least one selected from the group consisting of TFE and HFP and a structural unit (2) based on at least one selected from the group consisting of vinyl alcohol and N-vinyl-2-pyrrolidone,
still more preferably one containing a structural unit (1) based on at least one selected from the group consisting of TFE and HFP and a structural unit (2) based on N-vinyl-2-pyrrolidone.

In order to further improve the ionic conductivity and voltage resistance, the fluorine-containing polymer (2) preferably contains 99.9 to 0.1 mol% of the structural unit (1) and 0.1 to 99.9 mol% of the structural unit (2) based on all the structural units. More preferably, the amount of the structural unit (1) is 65 to 7 mol% and the amount of the structural unit (2) is 35 to 93 mol%. Still more preferably, the amount of the structural unit (1) is 55 to 15 mol% and the amount of the structural unit (2) is 45 to 85 mol%. Particularly preferably, the amount of the structural unit (1) is 45 to 20 mol% and the amount of the structural unit (2) is 55 to 80 mol%.

The molar ratio ((1)/(2)) of the structural unit (1) to the structural unit (2) is preferably in the range of 0.07 to 1.50, more preferably in the range of 0.25 to 1.25, still more preferably in the range of 0.25 to 0.82.

The fluorine-containing polymer (2) may substantially consist of the structural units (1) and (2) only.

The fluorine-containing polymer (2) may contain a different structural unit in addition to the structural units (1) and (2) to the extent that the effects of the composite of the disclosure are not impaired. Examples of the different structural unit include a structural unit based on a fluoromonomer other than the aforementioned fluoromonomer (a), a functional group-containing monomer other than the aforementioned hetero group-containing monomer, an olefin free of halogen atoms and hydroxy groups, a (meth)acrylic monomer having a long-chain hydrocarbon group, a vinyl monomer having a long-chain hydrocarbon group, or the like. The total amount of the different structural units may be 0 to 50 mol%, 0 to 40 mol%, 0 to 30 mol%, 0 to 15 mol%, or 0 to 5 mol%.

Examples of the different fluoromonomer other than the fluoromonomer (a) include (1) an olefin containing three or more carbon atoms and a fluorine atom attached to an $sp^2$-hybridized carbon atom (the fluoromonomer (a) is not included), (2) a monomer represented by the formula: $CH_2$=CX-COORf (wherein X is Cl, H, or an alkyl group, and Rf is a fluoroalkyl group), (3) a monomer represented by the formula: $CH_2$=CH-Rf (wherein Rf is a fluoroalkyl group), and (4) a monomer represented by the formula: $CH_2$=CH-ORf (wherein Rf is a fluoroalkyl group).

An example of the alkyl group is a C1-C3 alkyl group, and a methyl group is preferred.

The fluoroalkyl group is preferably a C1-C12 linear or branched fluoroalkyl group.

Preferred examples of the different fluoromonomer include trifluorostyrene, a fluoromonomer represented by the formula: $CH_2=CFRf^1$ (wherein $Rf^1$ is a C1-C12 linear or branched fluoroalkyl group), fluoroalkyl vinyl ether, fluoroalkyl ethylene, trifluoropropylene, pentafluoropropylene, trifluorobutene, tetrafluoroisobutene, hexafluoroisobutene, and trifluorostyrene.

An example of the functional group-containing monomer other than the hetero group-containing monomer is cinnamic acid.

Examples of the olefin free of halogen atoms and hydroxy groups include non-fluorinated olefins such as ethylene, propylene, n-butene, and isobutene.

The fluorine-containing polymer (2) preferably has a weight average molecular weight of 10000 or more, more preferably 15000 or more, still more preferably 20000 or more, particularly preferably 30000 or more. The weight average molecular weight is more preferably 15000 to 500000, still more preferably 20000 to 300000, particularly preferably 30000 to 300000. The weight average molecular weight can be determined by gel permeation chromatography (GPC) .

The fluorine-containing polymer (2) can be produced, for example, by polymerizing monomers corresponding to the respective structural units by a known polymerization method.

When the fluorine-containing polymer (2) contains a structural unit based on a vinyl alcohol (-[$CH_2$-CH(OH)]-), the fluorine-containing polymer (2) can be produced by polymerizing a fluoromonomer and a vinyl ester monomer and then hydroxylating the ester moiety through saponification or the like, by polymerizing a fluoromonomer and a vinyl ether monomer and then converting an alkoxy group into a hydroxy group through deprotection, or the like.

Examples of the alkali metal salt in the composite (2) are the same as those usable in the composite (1).

The alkali metal salt is preferably dissolved in the fluorine-containing polymer (2). Thereby, the ionic conductivity is further improved.

The amount of the alkali metal salt is preferably 0.1 to 500 parts by mass, more preferably 1 to 100 parts by mass, still more preferably 10 to 50 pats by mass based on 100 parts by mass of the fluorine-containing polymer (2).

The composite (2) preferably further contains an organic hetero-crystal. Thereby, the ionic conductivity is further improved.

The organic hetero-crystal is preferably a plastic crystal (organic ionic plastic crystal (OIPC)) or molecular crystal containing a heteroatom and a carbon atom. The organic hetero-crystal preferably further contains a hydrogen atom.

Examples of the heteroatom included in the organic hetero-crystal include boron, oxygen, nitrogen, sulfur, phosphorus, silicon, and halogen atoms.

An example of the organic ionic plastic crystal is a compound that contains a cation containing at least one selected from the group consisting of nitrogen and phosphorus atoms and an anion containing at least one selected from the group consisting of boron, oxygen, nitrogen, sulfur, and fluorine atoms.

Examples of the cation include ammonium-based cations and phosphonium-based cations. Preferred among these are alkylammonium cations and alkylphosphonium cations.

Examples of the anion include a borate-based anion optionally containing a fluorine atom, a sulfonimide-based anion optionally containing a fluorine atom, a phosphate-based anion optionally containing a fluorine atom, and $H_2F_3^-$. Preferred among these include a borate-based anion containing a fluorine atom, a sulfonimide-based anion containing a fluorine atom, and a phosphate-based anion containing a fluorine atom.

A known compound such as nitrile succinate may be used for the organic ionic plastic crystal.

An example of the molecular crystal is a compound containing at least one selected from the group consisting of boron, oxygen, nitrogen, sulfur, silicon, and fluorine atoms.

The molecular crystal preferably contains an aromatic ring. Examples of the aromatic ring include a benzene ring and a thiophene ring.

A known compound may be used for the molecular crystal.

The amount of the organic hetero-crystal is preferably 0.1 to 100 parts by mass, more preferably 0.5 to 50 parts by mass based on 100 parts by mass of the fluorine-containing polymer (2).

The composite (2) may further contain a different component in addition to the fluorine-containing polymer (2), the alkali metal salt, and the organic hetero-crystal according to need.

The composite (2) preferably has a volatilization amount of 1 mass% or less, more preferably 0.1 mass% or less, still more preferably 0.01 mass% or less, particularly preferably 0.001 mass% or less based on the composite (2). The lower limit of the volatilization amount may be, but not limited to, 0 mass% or 0.0001 mass%.

The volatilization amount is a value determined by heating a sample at 60°C for 60 minutes and measuring the amount of gas obtained.

The composite (2) preferably has an alkali metal ion transport number of 0.3 or more, more preferably 0.5 or more, still more preferably 0.8 or more. The upper limit of the alkali metal ion transport number is not limited.

The alkali metal ion transport number may be a lithium ion transport number, a sodium ion transport number, or a potassium ion transport number, preferably a lithium ion transport number.

The alkali metal ion transport number is determined by the following method.

AC complex impedance measurement is performed, and the resistance value (R0) is estimated. Then, DC polarization measurement is performed, and that the current value becomes constant (the initial current value is defined as 10, and the constant current value is defined as Is) is confirmed. Thereafter, AC complex impedance measurement is performed again to estimate the resistance value (Rs).

The alkali metal ion transport number (t+) is calculated by the Evans equation represented by the following equation.

$$t+ = Is\ (\Delta V - I0 \cdot R0)/I0\ (\Delta V - Is \cdot Rs)$$

$\Delta V$: applied voltage
R0, Rs, 10, Is: defined as above

The composite (2) can be used in the field requiring the ionic conductivity and voltage resistance, and can be suitably used as a material constituting a battery, especially a secondary battery, for example.

The composite (2) is preferably used for an electrolyte. The electrolyte may be a solid electrolyte or a gel electrolyte. The composite (2) may be used as the electrolyte or as a material constituting the electrolyte.

The composite (2) can also fill the voids between solid particles, and thus is preferably present between solid particles constituting a battery, especially between inorganic solid particles (preferably in voids between these particles). In this embodiment, use of the composite (2) as an electrolyte is also preferred.

The composite (2) can be suitably used as a material constituting an all-solid-state battery, especially a secondary all-solid-state battery, particularly suitably as a material constituting an all-solid-state battery containing an inorganic solid electrolyte.

The disclosure also relates to a method of producing a composite, including:

step (1) of mixing a fluorine-containing polymer, an alkali metal salt, and a solvent to provide a mixture,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$-[CR^5R^6-CR^7R^8]-$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more; and
step (2) of removing the solvent from the mixture to provide a composite containing the fluorine-containing polymer and the alkali metal salt.

The production method of the disclosure enables suitable production of the composite (2).

Examples of the fluorine-containing polymer and the alkali metal salt in the production method of the disclosure are the same as the examples for the fluorine-containing polymer (fluorine-containing polymer (2)) and the alkali metal salt in the composite (2).

The solvent in step (1) may be any solvent capable of dissolving the fluorine-containing polymer and the alkali metal salt and may be water or an organic solvent, with an organic solvent being preferred.

Preferably, the solvent can also dissolve the above-mentioned organic hetero-crystal.

Examples of the organic solvent include nitrogen-containing organic solvents such as N-methyl-2-pyrrolidone, N,N-dimethylacetamide, and dimethylformamide; ketone solvents such as acetone, methyl ethyl ketone, cyclohexanone, and methyl isobutyl ketone; ester solvents such as ethyl acetate and butyl acetate; ether solvents such as tetrahydrofuran, dioxane, ethyl cellosolve, methyl cellosolve, diglyme, and triglyme; aromatic hydrocarbon solvents such as xylene, toluene, and solvent naphtha; aliphatic hydrocarbon solvents such as n-pentane, n-hexane, n-heptane, n-octane, n-nonane, n-decane, n-undecane, n-dodecane, and mineral spirits; and solvent mixtures of these.

Preferred among these are nitrogen-containing organic solvents such as N-methyl-2-pyrrolidone, N,N-dimethylacetamide, and dimethylformamide; and ketone solvents such as acetone, methyl ethyl ketone, cyclohexanone, and methyl isobutyl ketone.

In step (1), the components may be mixed in any order. For example, the mixing may be performed by mixing and dissolving the fluorine-containing polymer and the alkali metal salt simultaneously in the solvent, by mixing and dissolving the fluorine-containing polymer in the solvent and then mixing and dissolving the alkali metal salt, or by mixing and dissolving the alkali metal salt in the solvent and then mixing and dissolving the fluorine-containing polymer.

In step (1), the above-mentioned organic hetero-crystal may be further mixed. The mixing in this case may also be performed in any order, for example, by mixing and dissolving the organic hetero-crystal simultaneously with the fluorine-containing polymer and the alkali metal salt in the solvent, by mixing and dissolving the organic hetero-crystal in the solvent before adding the fluorine-containing polymer and the alkali metal salt, by mixing and dissolving the organic hetero-crystal after adding the fluorine-containing polymer and the alkali metal salt, or by mixing and dissolving the organic hetero-crystal between addition of the fluorine-containing polymer and addition of the alkali metal salt.

In step (2), the solvent can be removed by drying, for example. Heating may be performed if necessary.

The conditions of drying and heating can be appropriately determined according to the type of the solvent, or the like.

The production method of the disclosure may further include step (3) of applying the mixture obtained in step (1) to an object.

Step (3) is preferably carried out between step (1) and step (2).

The application in step (3) can be performed by a method such as brush coating, spray coating, dip coating, flow coating, dispenser coating, or screen coating.

The object in step (3) may be any object selected according to the uses. When the composite is used for a battery (preferably an all-solid-state battery), the object may be an electrolyte layer (preferably an inorganic solid electrolyte layer) or an electrode layer, for example.

The disclosure also relates to a battery including the structure of the disclosure or the composite (composite (2)) of the disclosure.

The battery of the disclosure is preferably a secondary battery.

The battery of the disclosure is preferably an alkali metal ion battery such as a lithium ion battery, a sodium ion battery, or a potassium ion battery, more preferably a lithium ion battery.

The battery of the disclosure may be a solid electrolyte battery, a gel electrolyte battery, or the like. The solid electrolyte battery may be an organic solid electrolyte battery or an inorganic solid electrolyte battery. The solid electrolyte battery may be an all-solid-state battery.

The organic solid electrolyte battery can contain the composite (2). For example, the composite (2) can be used as an organic solid electrolyte (solid polymer electrolyte).

The organic solid electrolyte battery may be an all-solid-state battery.

The inorganic solid electrolyte battery can contain the structure of the disclosure or the composite (2). For example, the structure of the disclosure can be used as a fundamental structure of the inorganic solid electrolyte battery. In addition, the composite (2) can be placed, for example, between inorganic solid particles (e.g., inorganic solid particles constituting the electrode or electrolyte) (preferably in voids between these particles). In this embodiment, the composite (2) can function as an electrolyte.

The inorganic solid electrolyte battery may be an all-solid-state battery.

The gel electrolyte battery can contain the composite (2). For example, the composite (2) can be used as a polymer material that holds the solvent or electrolyte solution in the gel electrolyte.

In a preferred embodiment, the battery of the disclosure is an all-solid-state battery. The all-solid-state battery is preferably a secondary all-solid-state battery. Also, the all-solid-state battery preferably contains an inorganic solid electrolyte.

The all-solid-state battery is preferably an all-solid-state alkali metal ion battery such as an all-solid-state lithium ion battery, an all-solid-state sodium ion battery, or an all-solid-state potassium ion battery, more preferably an all-solid-state lithium ion battery.

The all-solid-state battery preferably includes:

a positive electrode layer;
a negative electrode layer;
an inorganic solid electrolyte layer between the positive electrode layer and the negative electrode layer; and
a fluorine-containing polymer layer provided at least one selected from the group consisting of between the positive electrode layer and the inorganic solid electrolyte layer and between the negative electrode layer and the inorganic solid electrolyte layer.

At least one selected from the group consisting of the positive electrode layer and the negative electrode layer is preferably an electrode layer in the structure of the disclosure. The electrode active material and other materials constituting the positive electrode layer and the negative electrode layer are as described above.

The inorganic solid electrolyte layer is preferably an inorganic solid electrolyte layer in the structure of the disclosure. The inorganic solid electrolyte and other materials constituting the inorganic solid electrolyte layer are as described above.

The fluorine-containing polymer layer is preferably a fluorine-containing polymer layer in the structure of the disclosure described above or a layer containing the composite of the disclosure described above.

The all-solid-state battery may have a shape such as a coin, a laminate, a cylinder, or a square.

The all-solid-state battery can be produced, for example, by a method including sequentially stacking the positive electrode layer, the fluorine-containing polymer layer (if present), the inorganic solid electrolyte layer, the fluorine-containing polymer layer (if present), and the negative electrode layer, optionally pressing the stack, housing the stack in a battery case, and optionally swaging the battery case.

## EXAMPLES

The disclosure is described in more detail below with reference to examples. Still, the disclosure is not intended to be limited to these examples.

### <Production of composite>

### Examples 1 to 4

Used as a polymer was a polymer 1 being a copolymer of tetrafluoroethylene and N-vinyl-2-pyrrolidone (composition ratio (molar ratio) 48:52) or a polymer 2 being the same copolymer (composition ratio (molar ratio) 36:64). To acetone as a solvent were added the polymer, the lithium salt, and the additive as shown in Table 1 to prepare a solution containing 20 mass% of the lithium salt and 10 mass% of the additive relative to the polymer.

The solution was applied to a PET film and formed into a film with a bar coater, and the solvent was gradually removed with a high-temperature dryer, whereby composites 1 to 4 (solid electrolytes) were obtained. Here, the film formability was determined depending on whether the formed film could be peeled off from the PET film. The case where the film was peeled off was evaluated as good (film formation was successful), and the case where the film was not peeled off was evaluated as poor (film formation was failed).

The transparency of the obtained film was checked. The case with a transparent film was evaluated as good, and the case with a cloudy film was evaluated as poor. A transparent film shows that the lithium salt is sufficiently dissolved in the polymer.

Table 1 shows the results.

The volatilization amount of each obtained composite was measured by the following method. Table 2 shows the results.

<Volatilization amount>

Composites 1 to 4 obtained above were each heated at 60°C for 60 minutes, and the amount of gas generated was determined. The mass ratio of the gas to the composite before heating was determined as the volatilization amount.

Comparative Examples 1 and 2

Composites 5 and 6 were each prepared in the same manner as in Example 1 except that a polymer 3 (polyethylene oxide) was used instead of the polymer 1, and the film formability and transparency were evaluated. Table 1 shows the results.

[Table 1]

| | Solid electrolyte | Lithium salt | Polymer | Additive | Film formability | Transparency |
|---|---|---|---|---|---|---|
| Example 1 | Composite 1 | LiTFSI | Polymer 1 | Nitrile succinate | Good | Good |
| Example 2 | Composite 2 | LiFSI | Polymer 1 | Nitrile succinate | Good | Good |
| Example 3 | Composite 3 | LiFSI | Polymer 2 | Nitrile succinate | Good | Good |
| Example 4 | Composite 4 | LiTFSI | Polymer 1 | None | Good | Good |
| Comparative Example 1 | Composite 5 | LiTFSI | Polymer 3 | Nitrile succinate | Poor | Poor |
| Comparative Example 2 | Composite 6 | LiTFSI | Polymer 3 | None | Poor | Poor |

[Table 2]

| | Solid electrolyte | Volatilization amount (mass%) |
|---|---|---|
| Example 1 | Composite 1 | <0.001 |
| Example 2 | Composite 2 | <0.001 |
| Example 3 | Composite 3 | <0.001 |
| Example 4 | Composite 4 | <0.001 |

<Determination of electrochemical stability>

The oxidation resistance was evaluated by the linear sweep voltammetry (LSV) method. LSV measurement was performed using a solution containing 3 wt% LiTFSI and 2 wt% nitrile succinate in propylene carbonate as a solvent. Two measurement solutions were prepared: a measurement solution prepared by adding 1 mass% of the polymer 1 to the solution (Example 5); and a measurement solution prepared by adding 1 mass% of the polymer 3 to the solution (Comparative Example 3). A cell for LSV measurement was prepared by charging a measuring container with each of the prepared measurement solutions and dipping in the solution a platinum electrode as a working electrode and lithium metal as a counter electrode and a reference electrode. The potential was swept from open circuit voltage (OCV) to 8 V (vs. $Li^+/Li$) to the oxidation side at a sweep rate of 5 mV/s.

The results are shown in Fig. 1.

<Measurement of ion conductivity>

The same composites as in Example 1 and Comparative Example 2 were used as the samples for the measurement. Here, the PET film used in the film formation was replaced by copper foil, and after the polymer solution was applied to the copper foil and the solvent was removed, a coin-shaped piece was punched out from the formed film without peeling off the film from the copper foil (the process was changed as described because the film formation of a composite 6 was impossible).

A coin battery was produced by using a stainless steel working electrode and a stainless steel reference electrode and interposing the copper foil and the composite film between these electrodes. The prepared battery was connected to a device for AC complex impedance measurement using copper wire, and the resistance was measured. The measurement was carried out after leaving the battery in a thermostatic bath set at 60°C for 3 hours for allowing the electrode to sufficiently take in the electrolyte. The ionic conductivity $\sigma$ (S/cm) is defined as follows.

$$\sigma = C/R \quad (C = l/s)$$

In the equation, 1 represents the thickness of the sample, s represents the area thereof, and R represents the resistance thereof.

Table 3 shows the results.

[Table 3]

| | Solid electrolyte | Ion conductivity (60 ° C, S/cm) |
|---|---|---|
| Example 1 | Composite 1 | $2.6 \times 10^{-5}$ |
| Comparative Example 2 | Composite 6 | $8.0 \times 10^{-6}$ |

## Claims

**1.** A structure comprising:

an electrode layer;
an inorganic solid electrolyte layer; and
a fluorine-containing polymer layer between the electrode layer and the inorganic solid electrolyte layer,
the fluorine-containing polymer layer containing a composite that contains a fluorine-containing polymer and an alkali metal salt.

**2.** The structure according to claim 1,
wherein the fluorine-containing polymer contains a heteroatom other than a fluorine atom and contains a fluorine atom in a backbone.

**3.** The structure according to claim 1 or 2,
wherein the composite further contains an organic hetero-crystal.

**4.** A composite comprising:

a fluorine-containing polymer; and
an alkali metal salt,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$$-[CR^5R^6-CR^7R^8]-$$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more.

**5.** The composite according to claim 4,
wherein the functional group containing a heteroatom other than a fluorine atom is at least one selected from the group consisting of a hydroxy group, an amide group, a carbonate group, and an ester group.

**6.** The composite according to claim 4 or 5,
wherein the structural unit (1) is based on at least one selected from the group consisting of tetrafluoroethylene, hexafluoropropylene, chlorotrifluoroethylene, vinylidene fluoride, perfluoro(methyl vinyl ether), and perfluoro(propyl vinyl ether).

**7.** The composite according to any one of claims 4 to 6,

wherein the structural unit (1) is based on at least one selected from the group consisting of tetrafluoroethylene and hexafluoropropylene, and
the structural unit (2) is based on a compound represented by the formula (i):

[Chem. 1]

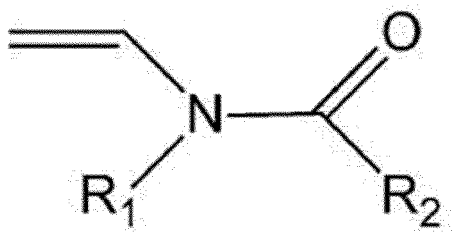

wherein $R_1$ and $R_2$ are each independently H or a C1-C10 alkyl group.

**8.** The composite according to any one of claims 4 to 7, further comprising an organic hetero-crystal.

**9.** The composite according to claim 8,
wherein the organic hetero-crystal is a plastic crystal or molecular crystal containing a heteroatom and a carbon atom.

**10.** The composite according to any one of claims 4 to 9, intended for use for an electrolyte.

**11.** A battery comprising the structure according to any one of claims 1 to 3 or the composite according to any one of claims 4 to 10.

**12.** The battery according to claim 11, being an all-solid-state battery.

**13.** A method of producing a composite, comprising:

step (1) of mixing a fluorine-containing polymer, an alkali metal salt, and a solvent to provide a mixture,
the fluorine-containing polymer containing a structural unit (1) represented by the formula:

$$-[CR^1R^2-CR^3R^4]-$$

wherein $R^1$ to $R^4$ are each independently H, F, Cl, $CF_3$, or $OR^{11}$, wherein $R^{11}$ is a C1-C8 organic group, and at least one of $R^1$ to $R^4$ is F, and
a structural unit (2) represented by the formula:

$-[CR^5R^6-CR^7R^8]-$

wherein $R^5$ to $R^8$ are each independently H, a C1-C3 alkyl group, a functional group containing a heteroatom other than a fluorine atom, or a group containing the functional group, and at least one of $R^5$ to $R^8$ is a functional group containing a heteroatom other than a fluorine atom or a group containing the functional group,
the fluorine-containing polymer not containing a structure represented by the formula: $-(R^aO)_m-$, wherein $R^a$ is a perfluoroalkylene group, and m is an integer of 2 or more; and
step (2) of removing the solvent from the mixture to provide a composite containing the fluorine-containing polymer and the alkali metal salt.

**14.** The production method according to claim 13, further comprising step (3) of applying the mixture obtained in step (1) to an object.

FIG.1

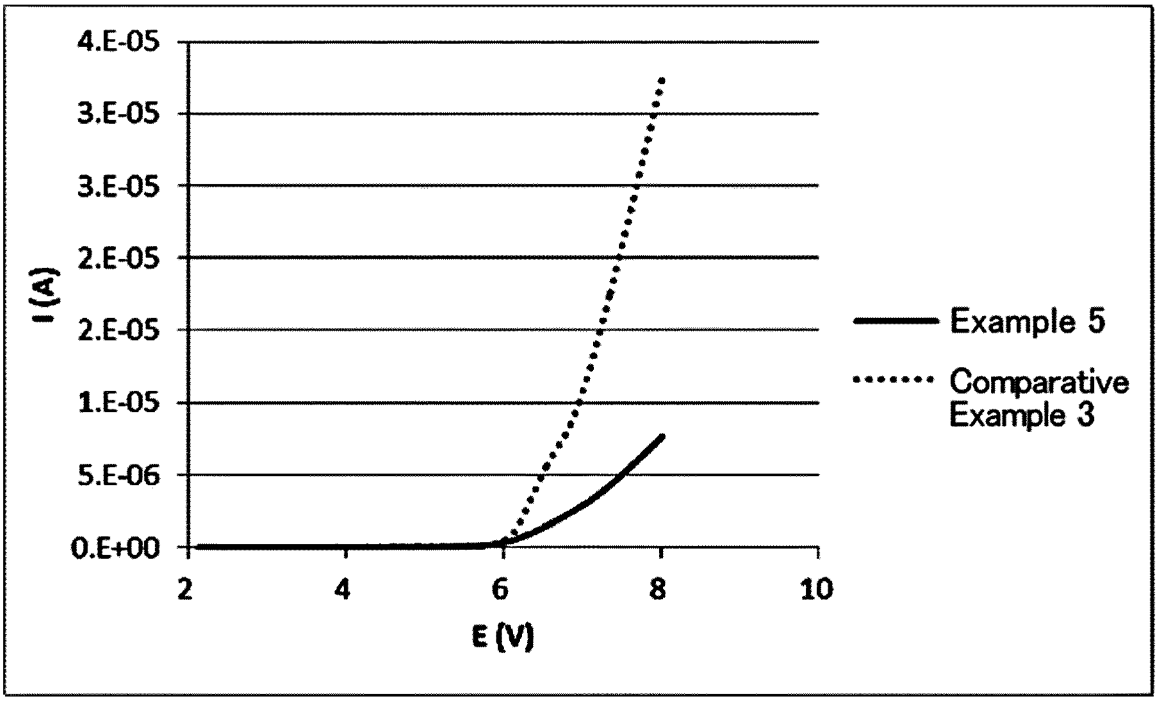
4.E-05
3.E-05
3.E-05
2.E-05
2.E-05
1.E-05
5.E-06
0.E+00
I (A)
2
4
6
8
10
E (V)
Example 5
Comparative Example 3

## INTERNATIONAL SEARCH REPORT

International application No.
PCT/JP2020/002647

A. CLASSIFICATION OF SUBJECT MATTER
H01M 10/052(2010.01)i; H01M 10/054(2010.01)i; H01M 10/0562(2010.01)i; H01M 10/0565(2010.01)i; H01M 10/0585(2010.01)i
FI: H01M10/0585; H01M10/052; H01M10/054; H01M10/0562; H01M10/0565
According to International Patent Classification (IPC) or to both national classification and IPC

B. FIELDS SEARCHED

Minimum documentation searched (classification system followed by classification symbols)
H01M10/052; H01M10/054; H01M10/0562; H01M10/0565; H01M10/0585

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-097843 A (PANASONIC CORP.) 30.04.2010 (2010-04-30) claims 1, 9-11, example 1 | 1, 11, 12<br>2-10, 13-14 |
| A | JP 2012-221749 A (SUMITOMO ELECTRIC INDUSTRIES, LTD.) 12.11.2012 (2012-11-12) claims | 1-14 |
| A | JP 2018-186026 A (TOYOTA MOTOR CORP.) 22.11.2018 (2018-11-22) claims | 1-14 |
| A | JP 2016-1:39512 A (FUJIFILM CORPORATION) 04.08.2016 (2016-08-04) claims | 1-14 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 March 2020 (23.03.2020) | 07 April 2020 (07.04.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/002647

| Patent Documents referred in the Report | Publication Date | Patent Family | Publication Date |
|---|---|---|---|
| JP 2010-097843 A | 30 Apr. 2010 | US 2010/0099029 A1 claims 1, 9-11, example 1<br>CN 101692504 A | |
| JP 2012-221749 A | 12 Nov. 2012 | (Family: none) | |
| JP 2018-186026 A | 22 Nov. 2018 | US 2018/0316012 A1 claims<br>CN 108807866 A | |
| JP 2016-139512 A | 04 Aug. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013532360 T
- JP 2018522085 T